# EUROPEAN PATENT APPLICATION

(11) **EP 2 287 509 A1**
(43) Date of publication of application: **23.02.2011**
(21) Application number: 10172986.1
(22) Date of filing: 17.08.2010
(51) Int. Cl.: F16L 33/01, F16L 33/00

(54) **Coupling for large bore reinforced hose**

(30) Priority: 20.08.2009 US 235460 P
(71) Applicant: Veyance Technologies, Inc., Fairlawn, Ohio 44333 (US)
(72) Inventor: Kozak, Robert J., Burlington, IA 52601 (US); Watts, Mike T., Hartville, OH 44632 (US); Borowczak, Marc, N. Canton, OH 44720 (US)
(74) Representative: Dreiss

(57) **Abstract**

A coupling for a large bore hose (2) comprises a tubular body (3) which is adapted for fitting into the end (5) of said large bore hose (2), said tubular body (3) having a tail end (4) which is adapted to lie inwardly from the end (5) of the hose (2), said tubular body (3) having an outer end (6) which is adapted to extend beyond an axial end of the hose (2), the outer surface of said tubular body (3) being provided with a plurality of axially spaced retention beads (7,8), and at least one hose carcass anchor (9) which is affixed to the tubular body (3) at a point on or outward from the last retention bead toward the outer end of the tubular body (3), wherein the carcass anchor (9) is adapted for the hose carcass (10) and/or load bearing extensions of the carcass to extend through and around the carcass anchor (9).

## Description

The present invention relates to a coupling according to the preamble of claim 1 and to a hose assembly according to the preamble of claim 10. Such a coupling and such a hose assembly are per se known.

Large bore reinforced hose can be utilized in a wide array of applications. One important application for large bore reinforced hose that is of growing importance in the world today is in loading and unloading oil tankers and floating production storage and offloading units (FPSOs). Such hose has an inside diameter of 5 cm or greater and typically has an inside diameter ranging from 20 cm to 80 cm. Such hose for offshore applications is also typically designed to include a floatation medium to provide the hose with sufficient buoyancy so that it will float on the surface of water. Hose for offshore applications typically has reserve buoyancy when filled with sea water which is within the range of 10% to 40%. A reserve buoyancy of at least 20% is frequently demanded by customers. Because vast reserves of petroleum are located under water in many locations around the world including under the North Sea, the Gulf of Mexico, off the coast of Brazil, and off the coast of California there is a growing demand for large bore reinforced floating hose.

Transferring the crude oil from FPSOs to shuttle tankers at sea is an extremely demanding task because of the persisting relative movement between the vessels. During times of adverse weather conditions, such as high waves, high winds, and storms at sea, this tack becomes even more difficult. Floating hoses typically run from the bow and/or the stem of FPSOs to shuttle tankers. Modem shuttle tankers may have a bow manifold for charging crude oil, but many conventional shuttle tankers have a charging device consisting of a midship manifold for intake of the oil load. For this reason a relatively long loading hose is needed, from the FPSO-vessel to the midship manifold on the shuttle tanker. The separation between the vessels, between the stem of the FPSO and the bow of the shuttle tanker is generally about 50 to 200 meters, and the extension of the floating hose is normally between about 150 and 300 meters.

When the floating hoses are not being used to transfer petroleum they can be allowed to remain floating on the water after being released from the tankers. However, in such cases where the floating hose is left on the water the floating hose may be damaged by being struck by ships, sea creatures or by the movement from waves in stormy weather. In any case, hose wear occurs due to continual wave action. This can lead to a loss of the buoyancy and/or primary carcass failure and over time the hose can begin sink.

In the alternative, the floating hose can be hoisted onto the FPSO for storage until it is again needed for offloading crude oil to a shuttle tanker. This can be done by using a wench to pull the floating hose onto a reel. This protects the hose from exposure to waves and the inherent wear associated therewith. It also eliminates the danger of the floating hose being struck by a ship as it is floating at sea. However, pulling the hose onto a reel puts the couplings that connect different sections of hose under a tremendous amount of stress. At the point where the coupling is being pulled onto the reel it experiences a particularly high level of stress and compressive forces. Over time, these forces can cause the hose to fail at or near the point where it is attached to a coupling. In any case, large bore reinforced hoses are prone to failure at their couplings. This is also the case where large tensile loads are encountered in catenary and deep water submarine applications.

Today, there is a need for couplings for large bore reinforced hoses that are more resilient and which are capable of being incorporated into hoses that are more durable and capable of being repeatedly pulled onto reels and more resilient to high tension and bending loads. It would accordingly be desirable to develop couplings for large bore reinforced hoses that are more resistant to failure and which have a longer service under harsh service conditions, such as being repeatedly pulled onto reels.

The objective underlying to the present invention is to provide couplings that fulfill the above identified need. A further objective is to provide a hose assembly including reinforced hoses that match the above identified needs.

These objectives are achieved by the coupling of claim 1 and the hose assembly of claim 10, respectively.

The hose couplings of this invention can be used to connect sections of large bore reinforced hose to make them more resistant to damage and to provide longer service life. These couplings can be used in conjunction with virtually any reinforced hose and are particularly beneficial when used in conjunction with hose that has a propensity to being damaged by virtue of being subjected to axial and bending forces, such as those encountered while being spooled on a reel. More specifically, hose utilizing the couplings of this invention is not as susceptible to being damaged or destroyed by the forces normally encountered during normal usage. This extends the service life of hoses of this invention which include such couplings.

The present invention more specifically discloses a coupling for a large bore hose, said coupling comprising a tubular body which is adapted for fitting into the end of said large bore hose, said tubular body having a tail end which is adapted to lie inwardly from the end of the hose, said tubular body having an outer end which is adapted to extend beyond an axial end of the hose, and at least one hose carcass anchor which is affixed to the tubular body, wherein the carcass anchor is adapted for the hose carcass and/or load bearing extensions of the carcass to extend through and/or around the carcass anchor.

The subject invention also reveals a coupling for a large bore hose, said coupling comprising a tubular body which is adapted for fitting into the end of said large bore hose, said tubular body having a tail end which is adapted to lie inwardly from the end of the hose, said tubular body having an outer end which is adapted to extend beyond an axial end of the hose, the outer surface of said tubular body being provided with a plurality of axially spaced retention beads, and at least one hose carcass anchor which is affixed to the tubular body at a point on or outward from the last retention bead toward the outer end of the tubular body, wherein the carcass anchor is adapted for the hose carcass and/or load bearing extensions of the carcass to extend through and around the carcass anchor.

The subject invention also reveals a hose assembly comprising a reinforced hose having at least one reinforcement layer and a coupling on at least one end of the hose, said coupling comprising a tubular body which is adapted for fitting into the end of said large bore hose, said tubular body having a tail end which is adapted to lie inwardly from the end of the hose, said tubular body having an outer end which is adapted to extend beyond an axial end of the hose, and at least one hose carcass anchor which is affixed to the tubular body, wherein the hose carcass and/or load bearing extensions of the hose carcass extend through and/or around the carcass anchor.

The subject invention further reveals a hose assembly, sometimes referred to as the "hitching post assembly," comprising a reinforced hose having at least one reinforcement layer and a coupling on at least one end of the hose, said coupling comprising a tubular body which is adapted for fitting into the end of said large bore hose, said tubular body having a tail end which is adapted to lie inwardly from the end of the hose, said tubular body having an outer end which is adapted to extend beyond an axial end of the hose, the outer surface of said tubular body being provided with a plurality of axially spaced retention beads, and at least one hose carcass anchor which is affixed to the tubular body at a point on or outward from the last retention bead toward the outer end of the tubular body, wherein the hose carcass and/or load bearing extensions of the hose carcass extend through and around the carcass anchor.

Further advantages can be taken from the description and the enclosed drawings.

It is to be understood that the features mentioned above and those yet to be explained below can be used not only in the respective combinations indicated, but also in other combinations or in isolation, without leaving the scope of the present invention.

Embodiments of the invention are shown in the drawings and will be explained in more detail in the description below. In the drawings:
Figure 1 is a cross sectional illustration of the coupling of this invention which is attached to the end of a hose.
Figure 2 is a view of the hose helix anchoring to a fitting ring with fabric.
Figure 3 is a first view illustrating anchoring a second set of main reinforcements to a ring.
Figure 4 is a second view illustrating anchoring a second set of main reinforcements to a ring.
Figure 4a also illustrates the embodiment of the invention shown in Figure 4 with a series of anchoring fabrics being shown as extending through a series of slots in the coupling before they are folded back upon themselves and cured into the hose carcass in the manufacturing process.
Figure 5 illustrates a coupling having a carcass anchor which is a plurality of pins that extend radially from the tubular body of the coupling.
Figure 6 is a cutaway view showing a coupling having a carcass anchor which is a plurality of pins that extend radially from the tubular body of the coupling with the carcass and reinforcing fabric extending through and around the carcass anchor.
Figure 7 is a first view that illustrates a coupling with an anchoring helix to fitting with steel cable.
Figure 8 is a second view that illustrates a coupling with an anchoring helix to a fitting with steel cable.
Figure 9 is a third view that illustrates a coupling with an anchoring helix to a fitting with steel cable.
Figure 10 is a first view that illustrates an anchoring helix to a fitting with steel bars.
Figure 11 is a second view that illustrates an anchoring helix to a fitting with steel bars.
Figure 12 illustrates an anchoring helix to a fitting ring with a chain.

The couplings of this invention can be beneficially used in conjunctions with hoses of different sizes and that are designed for a wide variety of purposes. However, the couplings of this invention are of particular benefit for use in conjunction with large bore hoses having an inside diameter of at least 5 cm and which typically has an inside diameter ranging from 20 cm to 80 cm and an outside diameter which is within the range of about 40 cm to about 150 cm, such as floating hose that is used in transferring crude oil and other liquids over water (in filling and unloading tanker ships), catenary systems and deep water submarine applications.

The couplings of this invention can be used in conjunction with floating hose having a carcass with an inside and an outside, a floatation medium surrounding the hose carcass and an outer cover. They may also be used in a single carcass hose that is either designed for floating, submarine applications or as a catenary system. This type of floating hose typically has an inside diameter which is within the range of about 30 cm to 80 cm and an outside diameter which is within the range of about 40 cm to about 150 cm. For instance, many commercial floating hoses of this type have an inside diameter of 50 cm (20 inches) and an outside diameter of 95 cm (38 inches).

The carcass is of a tubular shape and is typically comprised of a base submarine hose complete with end fittings. The hose carcass is surrounded by a floatation medium which is typically comprised of several layers of closed cell foam. The closed cell foam can be multiple layers of a polymeric foam, such as polyurethane foam or polyethylene foam. The floatation medium will have a density and a total volume that is sufficient to provide the floating hose 1 with a reserve buoyancy when filled with sea water which is within the range of 10% to 40%. The floating hose will more typically have a reserve buoyancy when filled with sea water which is within the range of 15% to 35%. In most cases the floating hose will have a reserve buoyancy when filled with sea water of about 25%. In fact, many specifications call for a reserve buoyancy of at least 20%.

The floating hose includes a carcass and can optionally include a second carcass to attain a higher level of safety, performance, and better durability. The hose carcass is typically comprised of a cured rubber which can be reinforced with a polymeric fabric, such as nylon or polyester, and/or steel reinforcements. For instance, the hose carcass can be reinforced with Kevlar® aramid fiber. The hose carcass will typically be comprised of a cured rubber, such as natural rubber, synthetic polyisoprene rubber, styrene-butadiene rubber (SBR), polyneoprene rubber, styrene-isoprene rubber, polybutadiene rubber, styrene-isoprene-butadiene rubber, nitrile rubber, carboxylated nitrile rubber, ethylene-propylene-diene monomer rubber (EPDM), or a mixture thereof. The hose carcass will also typically include one or more liners. To provide desired levels of chemical resistance such liners will generally be comprised of a nitrile rubber. To attain excellent heat resistance, oil resistance, and chemical resistance fluoroelastomers, such as Viton® fluoroelastomer, can be used in making the liners as well as thermoplastic liners, such as crosslinked polyethylene.

The floatation medium can be provided by wrapping multiple layers of closed cell foam around the hose carcass. A thin layer of rubber is preferably laid between the carcass and the floatation medium. The floatation medium will normally be about 6 cm to about 18 cm thick. In other words, the floatation medium will extend outwardly from the carcass about 6 cm to about 18 cm. The floatation medium will preferably be about 10 cm to about 15 cm thick and will most preferably be about 12 cm to about 14 cm thick.

The floatation medium is surrounded outwardly with the outer cover of the hose. The outer cover is normally comprised of textile breakers with a rubber cover (a textile reinforced rubber cover). The outer cover can optionally include a polyurethane coating. In any case, the outer cover is designed to contain and protect the floatation medium from water damage and environmental conditions.

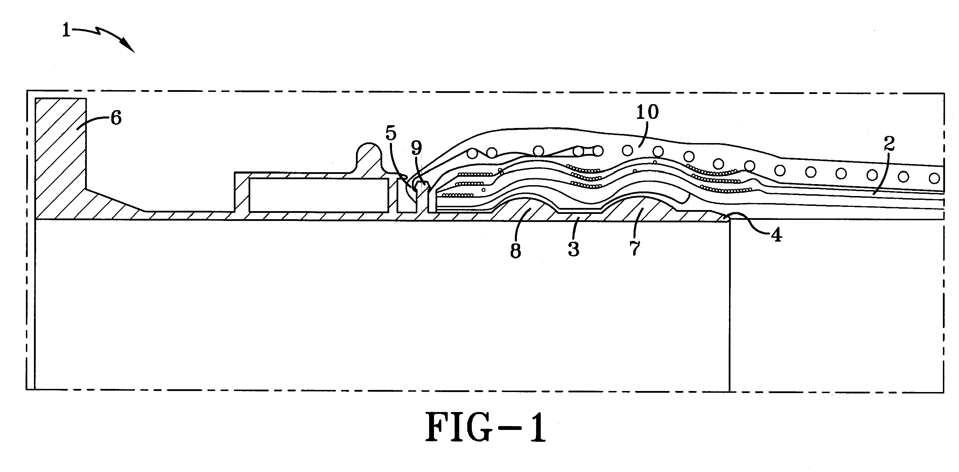

Figure 1 shows a coupling of this invention which is attached to the end of a hose to make a hose assembly 1. In this illustration the hose 2 is used in conjunction with the coupling to make a hose assembly 1. The coupling includes a tubular body 3, a tail end 4, an outer end 6, a first retention bead 7, a second (last as shown in Figure 1) retention bead 8, and a carcass anchor 9. Such couplings can contain more than two beads and more than one carcass anchor, if desired. On the other hand, in some applications it may be desirable for the coupling to contain no retention beads or only a single retention bead. In the embodiment of the invention shown in Figure 1 the end of the hose 5, including the hose carcass 10 and reinforcing fabric therein, extends around and through the carcass anchor 9. The carcass anchor 9 can be a series of pins that extend radially from the tubular body 3. The term pins as used in this context is intended to include bolts, rods or bars that extend radially outwardly from the tubular body of the coupling. The carcass anchor 9 can also be a ring that is affixed to the tubular body through a plurality of rods or plates that extend outwardly from the tubular body to the ring. In another embodiment of this invention, the carcass anchor 9 is in the form of metal wires or cables, such as steel wires or cables, that are attached directly to the coupling and which extend into the hose carcass. In most cases reinforcing elements within the hose carcass, such as reinforcing fabric and/or cords, will extend through and/or around the carcass anchor. In any case, the reinforcing fabric and/or cords will be securely affixed to the carcass anchor. For instance, steel reinforcement cords that extend into the hose can be welded to the carcass anchor in one embodiment of this invention.

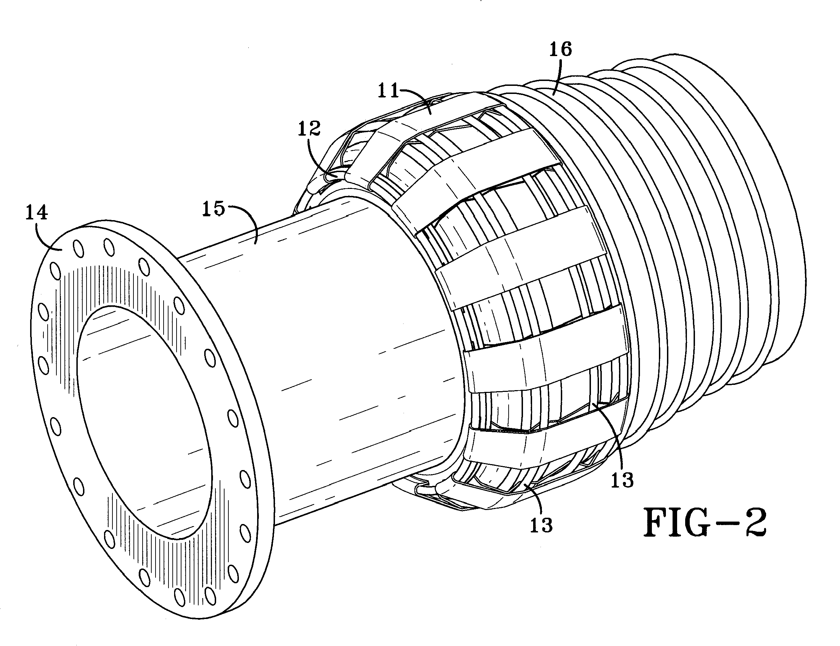

Figure 2 illustrates a hose helix anchored to a fitting ring with fabric. In this figure, the anchoring fabric 11 extends through and around the fitting ring 12 and anchors the hose helix wire 13 which is spirally wrapped around the carcass to the tubular body of the hose. The flange 14 of the coupling is conventional and used to connect multiple hoses together through fitting 15 which is anchored to the carcass 16 of the hose via the anchoring fabric 11 which is interwoven through and around the helix wire 13. Accordingly, Figure 2 illustrates one embodiment of the subject invention wherein a carcass anchor, in this case the anchoring fabric 11, is used as a load bearing extension which extends through and around a carcass anchor which in this case is fitting ring 12.

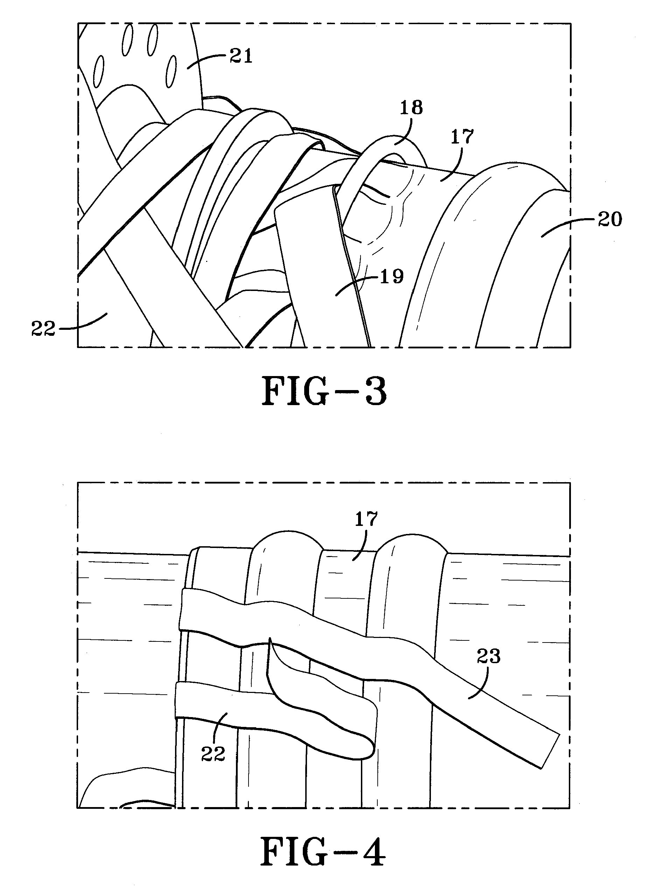

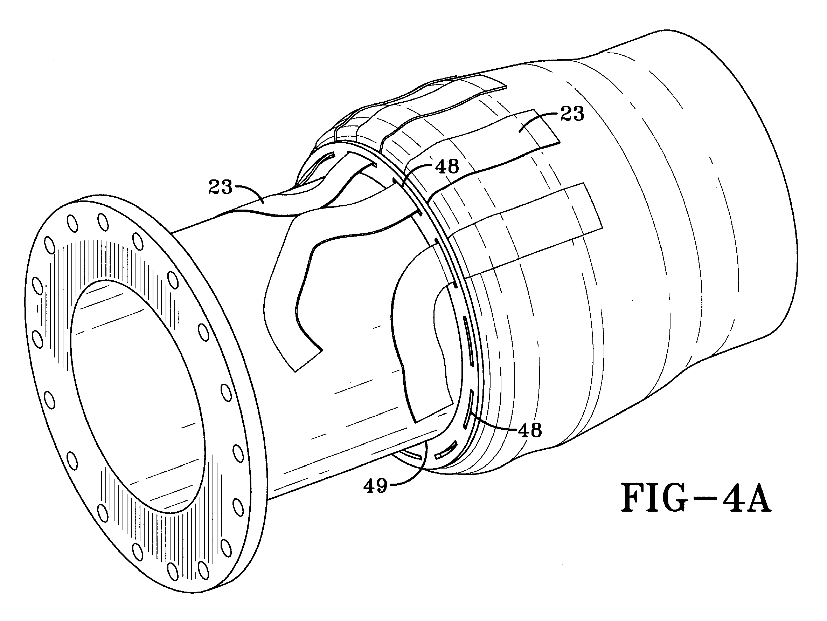

Figure 3 illustrates another anchoring mechanism wherein the main body reinforcement 17 is anchored to a fitting ring 18 with fabric 19 which is the main reinforcement that runs the full length of the hose. In this figure, the fabric 19 extends through and around the fitting ring 18 and anchors the main body reinforcement 17 which is spirally wrapped around the carcass to the tubular body 20 of the hose. The flange 21 of the coupling is conventional and can be used to connect multiple hoses together through fitting 22 which is anchored to the carcass of the hose via the anchoring fabric 19 which is attached to or a part of the main body reinforcement 17. Accordingly, Figure 3 illustrates one embodiment of the subject invention wherein a carcass anchor, in this case the anchoring fabric 19, is used as a load bearing extension which extends through and around a carcass anchor which in this case is fitting ring 18. Figure 4 illustrates an alternative embodiment in which supplemental fabric strips 23 are used to anchor the main body reinforcement 17. In this embodiment of the invention the supplemental fabric strips can be of any length and do not necessarily extend throughout the entire length of the hose. Figure 4a shows another view of the embodiment illustrated in Figure 4 wherein the fabric strips 23 extend through a series of slots 48 in the coupling retaining ring 49. The illustration shown in Figure 4a depicts the coupling in one step of its manufacturing process before the fabric strips are folded back upon themselves and cured into the hose carcass as illustrated in Figure 4. It should be noted that the fabric strips can optionally be wrapped around helix wires or can be simply folded or cured into the body of the hose.

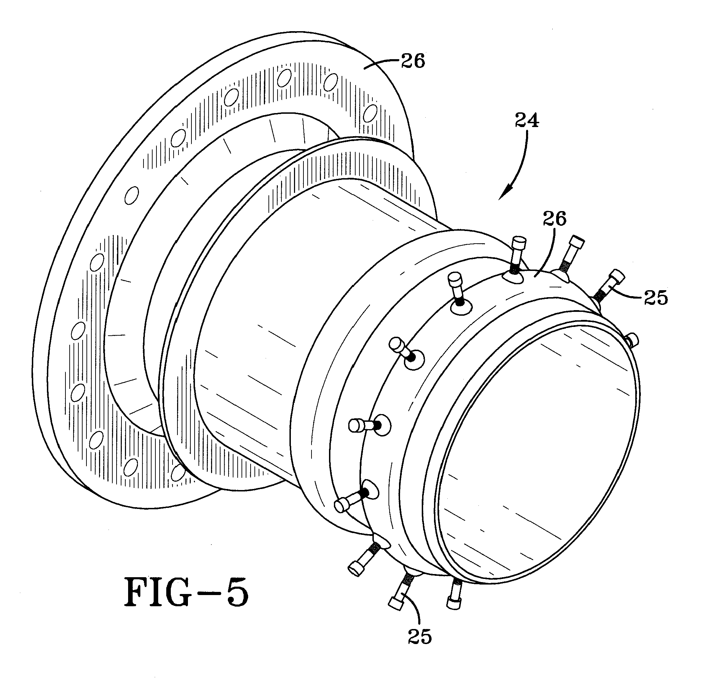

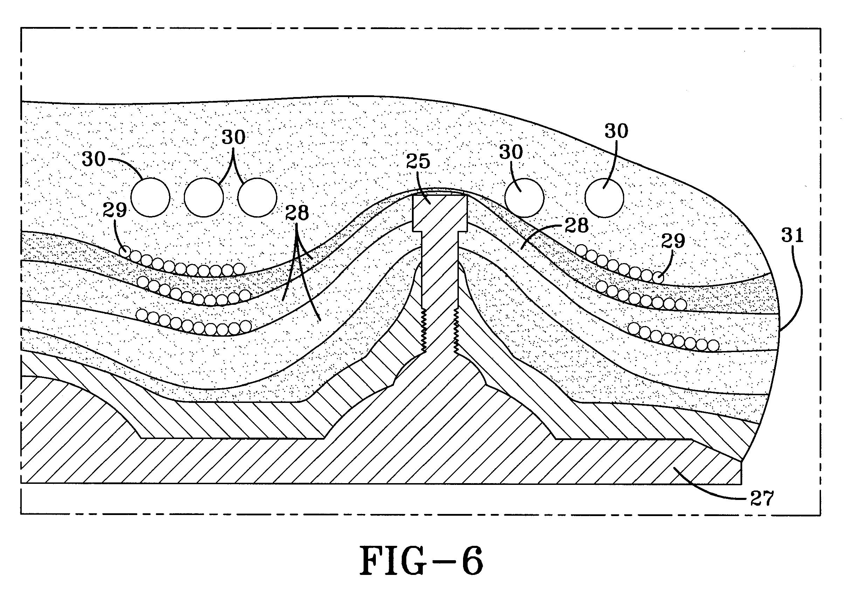

Figure 5 illustrates a coupling 24 having a carcass anchor which consists of a plurality of pins 25 which extend radially from the tubular body 26 of the coupling 24 which includes a flange 26 which is adapted for attaching the hose to other hose segments. Figure 6 shows a coupling for a large bore hose which has the coupling illustrated in Figure 5 attached thereto. In this embodiment of the invention the body of the coupling 27 has a multitude of pins 25 radially affixed thereto wherein the reinforcement fabric 28 is wrapped around the pin 25 and secured with binding wires 29. The helix wires 30 are situated past the pins 25 toward the flange end of the hose 31 to further secure the hose carcass to the coupling.

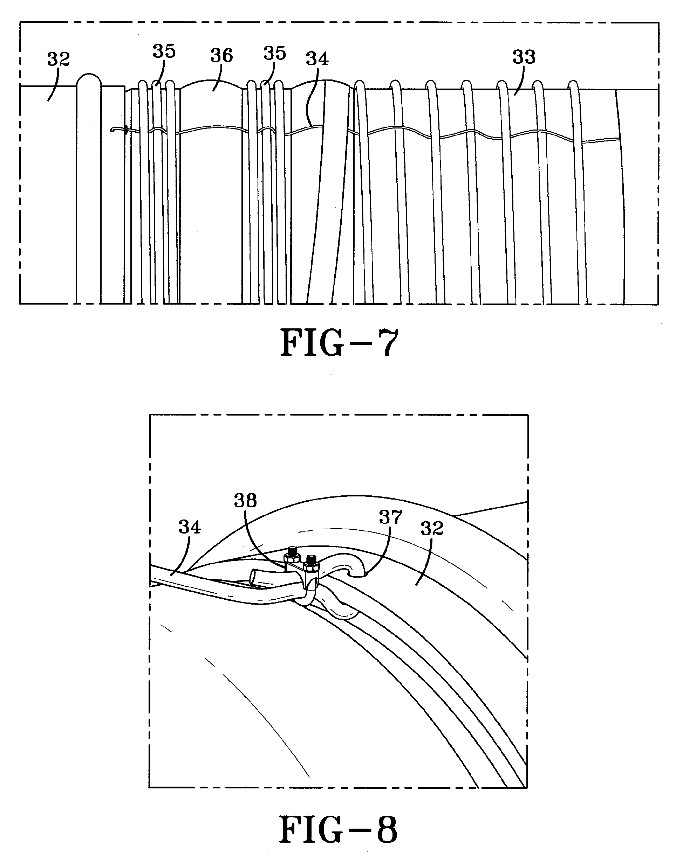

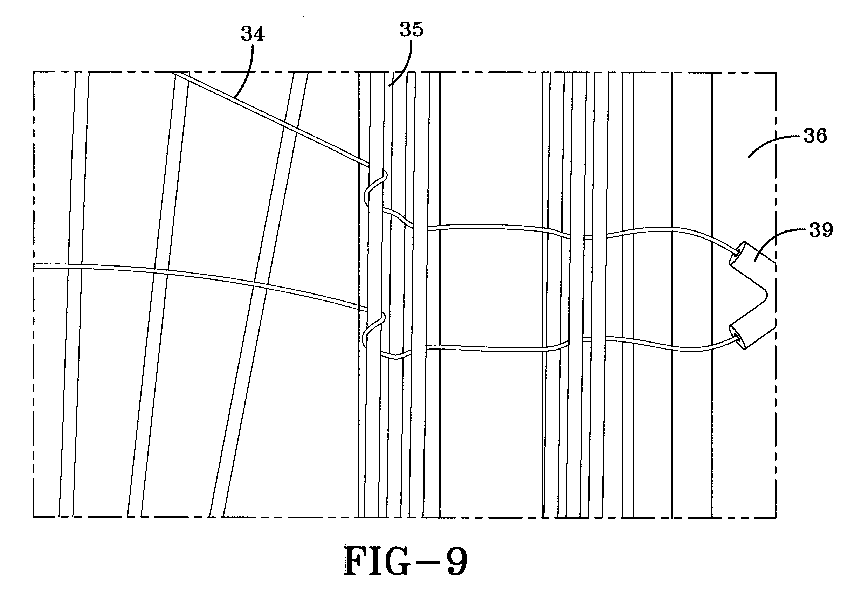

Figure 7 illustrates a large bore hose having a coupling in accordance with one embodiment of this invention. In this embodiment of the invention the coupling 32 is anchored to the hose carcass 33 through an anchoring wire 34 which is interwoven through the helix wire 35 and secured to the coupling 32. In this embodiment the anchoring wire 34 extends over a bead of the hose carcass 36. Figure 8 illustrates a specific embodiment for anchoring the anchoring wire 34 to the coupling 32. In this particular embodiment the anchoring wire 34 extends through a series of holes 37 (only one hole is shown in this figure) in the coupling 32 and is bent back on itself and secured with a clamping device 38. Typically, a series of anchoring wires are affixed to the coupling by being passed through a multitude of holes in the coupling. Figure 9 illustrates a further means for affixing the anchoring wire 34 to the coupling 36 which involves passing the anchoring wire 34 through a pipe 39 which is affixed to the coupling 36 via a secure attachment means (such as through a weld). Normally, a series of pipe segments 39 are attached to the coupling to facilitate affixing a multitude of anchoring wires to the coupling. As can be seen in this embodiment of the invention the anchoring wire 34 is woven through the helix wires 35 as previously explained.

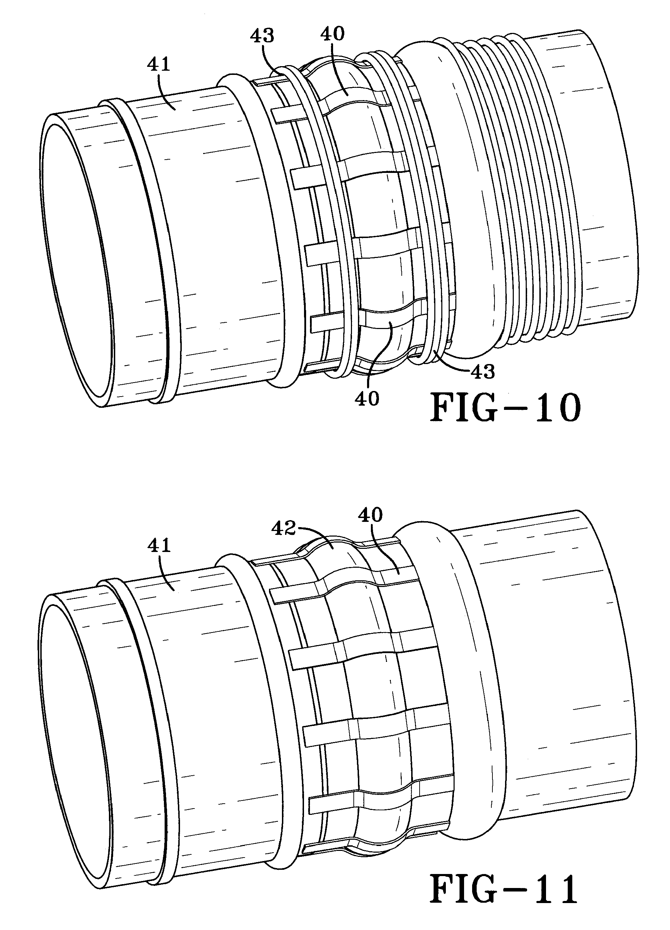

Figure 10 and Figure 11 illustrate still another embodiment of this invention. In this embodiment a series of steel strips 40 are securely affixed to the coupling 41 by an effective means such as being welded. The steel strips 40 are formed to conform with beads 42 and other structural irregularities of the hose. The steel strips are affixed to the helix wire 43 by some effective attachment means such as a series of welds.

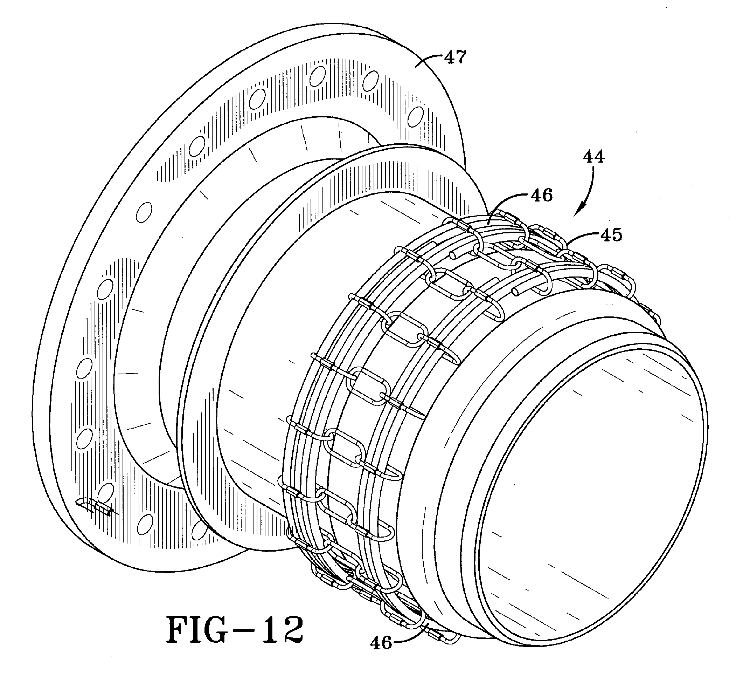

Figure 12 illustrates still another embodiment of this invention. Figure 12 shows the coupling 44 without the body of the hose being shown. In this embodiment of the invention steel chains which are comprised of a series of chain links 45 are used as the carcass anchor. The chains are attached to the coupling 44 either through welding or by being run through a series of holes in the coupling. The chain links are then affixed to the hose carcass (not shown) by passing the helix wires 46 through the chain links 45. The coupling 44, of course, includes a conventional flange 47 for attaching the hose to a fluid inlet or outlet or another hose.

The key to this invention is providing the coupling with anchors that allow the hose carcass or a load bearing extension of the carcass to extend through and around the anchors. This allows for the stress associated with tensile loading to be delivered directly to the coupling through the carcass anchors rather than through the interface between the hose and the tubular body of the coupling as is the case with the coupling designs of the prior art. The carcass anchors will normally extend into the hose no further than the cement line behind the first retention bead. In many cases, the carcass anchors will not extend into the hose as far as the first retention bead.

In one embodiment of this invention the carcass anchor is a plurality of pins that extend radially from the tubular body. In another embodiment of this invention the carcass anchor is a ring which is affixed to the tubular body through a plurality of rods or plates that extend outwardly from the tubular body to the ring. The outer surface of the tubular body is provided with at least one retention bead. For instance, the outer surface of the tubular body can include two retention beads or a plurality of axially spaced retention beads. The carcass anchor is attached to the tubular body at a point on or outward from the retention bead toward the outer end of the tubular body.

The reinforcing fabric of the hose carcass can extends through and/or around the carcass anchor. In on embodiment of this invention the carcass anchor is a plurality of pins that extend radially from the tubular body. In another embodiment of this invention the carcass anchor is a ring which is affixed to the tubular body through a plurality of rods or plates that extend outwardly from the tubular body to the ring. Typically, the hose will be void of longitudinal supports. The carcass wire can be a metal wire or cable, such as a steel wire or cable, which is directly attached to the coupling.

The outer surface of the tubular body is typically provided with at least one retention bead and can include two retention beads. In some cases, it may be desirable for the outer surface of the tubular body of the coupling to include a plurality of axially spaced retention beads. The carcass anchors are normally situated outwardly toward the end of the hose from the first retention bead. For instance, the carcass anchors are situated outwardly toward the end of the hose from the cement line behind the first retention bead. Normally, the carcass anchor is attached to the tubular body at a point on or outward from the last retention bead toward the outer end of the tubular body.

In one embodiment, the carcass anchor is initiated between the outer end of the coupling and the last retention bead on the coupling. The last retention bead my be a second retention or a first retention bead. According to a further embodiment, a carcass wire is directly attached to the coupling.

While certain representative embodiments and details have been shown for the purpose of illustrating the subject invention, it will be apparent to those skilled in this art that various changes and modifications can be made therein without departing from the scope of the subject invention, as defined by the appended claims.

## Claims

1. A coupling for a large bore hose (2) which includes a tubular body (3) which is adapted for fitting into the end (5) of said large bore hose (2), said tubular body (3) having a tail end (4) which is adapted to lie inwardly from the end (5)of the hose (2), said tubular body (3) having an outer end (6) which is adapted to extend beyond an axial end of the hose (2), **characterized by** said coupling further including at least one hose carcass anchor (9) which is affixed to the tubular body (3), wherein the carcass anchor (9) is adapted for the hose carcass (10) and/or load bearing extensions of the carcass (10) to extend through and/or around the carcass anchor (9).

2. The coupling as specified in claim 1 **characterized in that** the carcass anchor (9) is a plurality of pins (25) that extend radially from the tubular body (26).

3. The coupling as specified in claim 1 **characterized in that** the carcass anchor (9) is a ring which is affixed to the tubular body through a plurality of rods or plates that extend outwardly from the tubular body to the ring.

4. The coupling as specified in claim 1, 2, or 3 **characterized in that** the outer surface of the tubular body (3) is provided with at least one retention bead (7).

5. The coupling as specified in claim 1, 2, or 3 **characterized in that** the outer surface of the tubular body (3) is provided with a plurality of axially spaced retention beads (7, 8).

6. The coupling as specified in claim 4 or 5 **characterized in that** the carcass anchor (9) is attached to the tubular body (3) at a point on or outward from the retention bead (7, 8) toward the outer end (6) of the tubular body (3) of the coupling.

7. The coupling as specified in claim 4 **characterized in that** the carcass anchor (9) is situated between the outer end (6) of the coupling and the last retention bead (8) on the coupling.

8. The coupling as specified in claim 7 **characterized in that** the last retention bead is the second retention bead (8).

9. The coupling as specified in claim 7 **characterized in that** the last retention bead is the first retention bead (7).

10. A hose assembly (1) is **characterized by** including a reinforced hose having at least one reinforcement layer and the coupling of any of the preceding claims on at least one end of the hose.

11. The hose assembly (1) as specified in claim 10 **characterized in that** reinforcing fabric (28) in the hose carcass (16) extends through and/or around the carcass anchor.

12. The hose assembly (1) as specified in claim 10 or 11 **characterized in that** the hose assembly is void of longitudinal supports.

13. The hose assembly (1) as specified in claim 10, 11, or 12 **characterized by** further including a carcass wire that is directly attached to the coupling.
